# EUROPEAN PATENT SPECIFICATION

(11) **EP 4 470 739 B1**
(45) Date of publication and mention of the grant of the patent: **06.05.2026**
(21) Application number: 24162365.1
(22) Date of filing: 08.03.2024
(51) Int. Cl.: B27N 9/00

(54) **PANEL AND METHOD FOR MANUFACTURING A PANEL**
PANEEL UND VERFAHREN ZUR HERSTELLUNG EINES PANEELS
PANNEAU ET PROCÉDÉ DE FABRICATION D'UN PANNEAU

(30) Priority: 13.03.2023 US 202363489780 P
(43) Date of publication of application: 04.12.2024
(60) Divisional application: 26158186.2
(73) Proprietor: Unilin, BV, 8710 Wielsbeke (BE)
(72) Inventor: Mouton, Kenny, 8710 Wielsbeke (BE)
(74) Representative: Unilin Technologies

(56) References cited:
- AU-B2- 427 793
- JP-A- S62 136 272

## Description

This invention relates to panels comprising a substrate, such as a wood fiber board or a particle board, and at least one covering layer attached to the upper surface or the lower surface of the substrate. This invention also relates to methods for producing such panels. This at least one covering layer preferably provides the panel with fire retardant properties and/or antistatic proprieties. With antistatic properties is indicated that the accumulation/buildup of static energy is prevented and/or minimized. Static charge could badly influence electronics present upon said panels due to a discharge of static electricity.

In particular, this invention relates to load-bearing panels, more specifically mezzanine floor panels. However also other type of panels which require fire retardant properties, more specifically flame retardant properties, and/or the prevention of accumulation/buildup of static energy, such as furniture panels, wall panels or floor panels are envisaged in this invention.

The above-mentioned so-called mezzanine panels are panels intended to be applied to a frame in order to form floors and/or stocking surfaces at desired heights. As is known, these are commonly used for the furnishing of warehouses and storage facilities in order thus to form stocking spaces at various levels. The frames usually consist of steel constructions that comprise horizontal beams placed at short distances from one another at the desired levels that support the mezzanine panels placed on them. Said mezzanine panels often have a particle board substrate, or a MDF/HDF substrate (medium density fiber board/high density fiber board).

Different solutions for providing panels with the abovementioned desired characteristics are known.

For providing panels with fire retardant properties, one could for example make use of panels comprising a fire retardant substrate, for example a fire retardant wood fiber board or a fire retardant particle board. Such a fire retardant substrate comprises fire retardant additives, for example flame retardant additives, that have been introduced during production of said substrate. Said fire retardant additives are for example phosphor comprising additives, such as ammonium phosphates - for example ammonium polyphosphate (APP) or mono-ammonium phosphates (MAP)-, phophinate based materials, melamine (poly)phosphate, aluminum trihydroxide or calcium silicate. A disadvantage of such fire retardant substrates, is that additional additives need to be used and this throughout the entire substrate. Since the substrate normally takes up a relatively large volume of the panel, such panels are costly. Also the additional fire retardant properties obtained with such a fire retardant substrate is limited and is often not enough for panels, such as mezzanine panels, which require high fire retardant properties.

Additionally or another way to provide the panels with additional fire retardant properties and preferably sufficient flame retardant properties, is to provide the panel with at least one fire retardant layer, for example a flame retardant layer. Such a fire retardant layer, for example an aluminum foil, will normally cause the panel to show resistance to burning through and/or collapsing during a fire for a longer period than it would, if no such fire retardant layer were present and/or will reduce smoke production at least at the beginning of a fire. Depending on the use of the panel, this fire retardant layer could be attached to the upper surface of the substrate or this fire retardant layer could be attached to the lower surface of the substrate or two fire retardant layers could be respectively attached to the upper surface or the lower surface of the substrate. Such a panel is for example disclosed in WO 2020141384. This panel comprises an aluminum foil which is attached by a glue layer to the substrate. This panel has good fire retardant properties. However producing such a panel requires many steps, for example to attach said aluminum foil to the substrate a specific glue is needed. Also said aluminum foil is sensitive to scratches and the application of a scratch resistant layer upon said aluminum foil is difficult. Also if one wants to provide different classes of fire retardant panels, one needs to have different types of aluminum foil. Said scratch resistant layer can have various purposes, such as providing a well-maintained appearance, more specifically in a specified color, for example grey, providing greater resistance to abrasion, for example to abrasion resulting from motor vehicles moving over the panel, such as e.g. forklift trucks and AGVs (automated guided vehicles), increasing slip resistance, reduction of the adhesion of dirt and/or material deposition resulting from the wheels of transport vehicles, obtaining an easily cleanable surface; and so forth. A panel with a similar fire retardant layer is also disclosed in BE 1022653.

To prevent the accumulation/buildup of static energy, the panel is provided with a layer which is sufficiently electrically conductive, e.g. an antistatic/electrically conductive layer. This can for example be done with electrically conductive/antistatic additives and/or the material of the layer itself can be electrically conductive/antistatic. For example said panel can comprise a layer with melamine resin, wherein antistatic additives are dispersed in said melamine resin. Said additives can for example comprise salt, such as alkali salt. A panel comprising said antistatic additives is described in WO 2004/050359. A disadvantage is that the antistatic properties are the result of a salt, such that the antistatic properties will according to the humidity. In dry and cold environments, said additives are not able to provide the panel with sufficient antistatic properties. Further if said panels are used to build a mezzanine, to conduct the electricity away from the panels, the mezzanine has the be installed in the correct manner. A possible installation of a mezzanine is shown in WO2021001712.

AU427793B2 discloses preamble of claim 1.

It is an object of the present invention to provide alternative panels, methods for manufacturing such panels and connecting systems comprising mezzanine panels, with said panels having fire retardant and/or antistatic properties. Preferably these panels and methods overcome one or more of the abovementioned problems.

The invention is described in the appended claims.

According to a first aspect, the invention relates to a panel, wherein said panel comprises at least a lignocellulose based substrate, such as a wood fiber board or a particle board, said substrate comprising an upper surface and a lower surface, and at least one covering layer attached to the upper surface or the lower surface, wherein said covering layer comprises a metal layer comprising aluminum/zinc metal alloy, wherein said metal layer directly adheres to the respective surface of the substrate and forms a film or coating that covers said surface of the substrate, wherein said covering layer further comprises a finishing layer which forms an outer side of the panel, wherein said metal layer adheres to said finishing layer, and wherein said metal layer preferably comprises at least 90 weight percentage by weight of aluminum/zinc metal alloy.

Said panel can be a load-bearing panel, for example a mezzanine floor panel. Said floor panel can also be a furniture panel or wall panel or floor panel.

The substrate is a lignocellulose based substrate, preferably a wood based substrate. Well known examples of such substrates are wood fiber boards, such as MDF (medium density fiberboard) or HDF (high density fiberboards) or LDF (low density fiberboard) or hardboard or softboard. A said substrate can also be a wood particle board. Other examples are flax boards, hemp boards, OSB (oriented strand board), multiplex, a timber, etc. A said particle board can be one-layered, but can also be multi-layered, for example have three layers with a central layer with more coarse wood chips and two outer layers with finer wood chips. A said metal layer can better adhere to a layer comprising finer wood chips. This panel comprises a lignocellulose based substrate. Preferably said substrate only comprises a wood fiber board or a wood particle board or another lignocellulose based board. However said substrate can, in addition to a said wood fiber board or wood particle board or another lignocellulose based board, comprise one or more additional layers. Said one or more additional layers can be chosen of the list: lacquer layer, resin impregnated paper, plastic layer, a resin layer, or a coating layer.

Depending on the type of panel and its desired use, one can have such a panel with only a said covering layer attached to the upper surface or only a said covering layer attached to the lower surface or two covering layers attached to respectively the upper surface and the lower surface. If two said covering layers are present, these can be or cannot be identical. If said covering layers are identical, they are preferably mirrored along the plane of the panel. For example if this panel needs fire retardant properties, one can decide only to have a covering layer for the surface of the panel that needs fire retardant properties, for example the surface of the wall panel that is intended to face the room in which it is installed or the bottom surface of the mezzanine panel. For example if this panel is a mezzanine panel and is desired to be used for its antistatic properties, one can choose only to have a covering layer attached to the upper surface. Of course it can be desired that both surfaces have fire retardant properties and/or antistatic properties. The panel can also have two covering layers, wherein one covering layer provides antistatic properties and the other fire retardant properties. The latter can be desired for mezzanine floor panels, wherein the upper surface is preferably antistatic and the lower surface fire retardant. Of course panels comprising one or two covering layers, wherein a said covering layer is desired for both antistatic properties and fire retardant properties are also desired. The antistatic properties also reduce the tendency of said panels to attract dust on its surface, as a result of which it must be cleaned less often. If only one said covering layer is present at one of said surfaces, then another layer which does not comprise a metal layer, could or could not be present at the opposite surface. This another layer can for example be a balancing layer, a decorative layer or a wear resistant layer.

The substrate itself is preferably free of fire retardant additives. The metal layer can indeed provide a sufficient fire retardant effect to meet most of the demands made in practice. Of course, this does not exclude the possible use of fire retardant additives in the substrate in order to provide increased performance.

The metal layer directly adheres to said surface. This means that no additional/intermediate glue layer is needed to attach the metal layer to the substrate. This indicates that the metal alloy is in direct contact with the substrate, such that said metal alloy is well capable of providing said panel with fire retardant and/or antistatic properties. Because of said metal layer, said panel will have greater resistance to burning through and/or said panel will only collapse during a fire after a longer period of time and/or at the beginning of a fire there will be less smoke production. Said metal alloy is electrically conductive, such that said panel obtains improved antistatic properties with said metal layer. Here no intermediate glue layer needs to be applied upon the said surface of the substrate. With the metal layer directly adhering to said surface is not excluded that the said surface has been subjected to any treatments before applying said metal layer. For example, said surface of the substrate can or cannot have undergone any mechanically and/or chemically treatment, before the application of said metal layer and this for example to improve the adherence of said metal layer and/or to ensure that the metal layer can be applied uniformly and/or sufficiently thin. For example the said surface can be sanded and/or planed and/or scraped and/or sandblasted. Additionally or alternatively, an impregnation agent or a lacquer or a coating can be applied upon said surface and this before applying said metal layer. The substrate can for example have an outer polymer coating, wherein said coating forms the upper surface or the lower surface of the substrate.

Surprisingly it has been found that such a directly adhered metal layer is quite suitable to attach to another layer, such that the said finishing layer can be well applied. Preferably said finishing layer is applied to the metal layer without an additional glue layer, however the latter is not excluded. Surprisingly it has been found that said metal layer provides sufficient antistatic properties, even when a finishing layer is applied to it. A said metal layer is suitable to directly press resin impregnated papers upon it.

Further the finishing layer, protects the metal layer, such that the fire retardant and/or antistatic properties do not diminish over time. Said finishing layer can be a transparent layer, such that the metal layer is visible and the panel has a metallic look. However said finishing layer could also have a certain color and/or décor and provide the panel with the desired look. Said finishing layer could comprise wear resistant particles such as corundum or aluminum oxide. Said finishing layer could comprise antistatic additives, such as salts or metal fibers, to enhance the antistatic properties of the panel. Said finishing layer could comprise fire retardant additives, to enhance the fire retardant properties of the panel.

In specific embodiments not in line with the claimed invention, the finishing layer could be absent. This is for example the case when wear resistance is not needed. If the covering layer forms the bottom of a mezzanine panel, one could choose not to have a finishing layer.

Preferably the metal layer adheres to the surface in such a way that metal alloy of the metal layer directly adheres to the lignocellulose based material, thus for example directly adheres to the wood fibers or wood chips. If the substrate consists of a wood fiber board or a wood particle board, then metal alloy of said metal layer preferably directly adheres to wood fibers or the wood chips respectively. This provides excellent fire retardant properties and will ensure that the substrate will not burn quickly in case of fire.

The substrate itself can be a fire retardant substrate, such as fire retardant MDF/HDF or fire retardant particle board. However with this metal layer, one does not require fire retardant substrates to have a panel with sufficient fire retardant properties.

The metal layer can be single layered, but can also have two metal sublayers or three or more metal sublayers. If the metal layer comprises at least two metal sublayers, these metal sublayers can have the same composition, can for example comprise the same metal alloy, or can have a different composition and thus comprise another metal or metal alloy. The latter can be useful if one metal sublayer is for example more suitable to adhere to wood based components, while the other metal sublayer is more suitable to adhere to the finishing layer. The choice for the type of metal layer will depend on the desired properties and will also depend upon the substrate and the finishing layer. A said single layered metal layer or a said metal sublayer is preferably a uniform metal layer, meaning that the composition of said metal layer is the same throughout the entire plane of said metal layer. However a said single layered metal layer or a said metal sublayer may also be not uniform. This means a said metal layer, can have at least two different parts which extend next to each other according to the plane of said metal layer, for example a part of first metal/metal alloy -e.g. copper- and a part of a second metal/metal alloy -e.g. aluminum/zinc alloy-. This can be advantageous if a said metal layer also forms an electrical circuit and/or needs magnetic properties at certain locations and/or requires different properties at different locations.

Preferably this metal layer is free from sheets and/or free from reinforcement layers and/or free from wear resistant particles, such as corundum.

The metal layer directly adheres to the respective surface of the substrate and forms a film or coating that covers said surface of the substrate. This film or coating could substantially completely cover said surface of the substrate and as such form a layer that almost completely separates the substrate from the finishing layer, if a said finishing layer is present. This will ensure that said finishing layer can be applied in a uniform matter and also each part of the panel will have the same reaction to fire/heat and/or static electricity. However said film or coating can also have openings/perforations. This can have advantages. For example the finishing layer could better adhere, fire retardant properties could be improved and less metal is needed.

Said covering layer can be an antistatic layer and can have for example a resistance of between 10^5 ohm/m² and 10^9 ohm/m² or said covering layer can be a very conductive layer and have a resistance below 10^5 ohm/m². Said covering layer can also have a resistance of more than >10^9 ohm/m². Resistance can be measured with an ohm meter. The antistatic properties of the panel can be determined with the aid of ANSI/ESD S6.1. A panel according to the first aspect of the invention could for example have a fire class B_{f1}-s1 or B-s2 d0 according to the European Standard 13501-1.

Said metal layer comprises aluminum and zinc. The choice for a specific metal and/or metal alloy and/or to have one metal layer or two or more metal sublayers and/or to have uniform metal (sub)layers, will depend on certain factors. The factors can be chosen from one or more of the following list:
- price. For example copper is more expensive than zinc.
- conductivity. If the metal layer is applied for anti-static reasons, one could choose to apply a more conductive metal or metal alloy, with copper being for example a good conductor. If one wants to apply a very thin metal layer, one could choose for a more conductive metal or metal alloy.
- lamination properties. Some finishing layers can more easily be laminated to a specific metal or metal alloy. For example resin impregnated paper sheets, for example melamine impregnated paper sheets, will better adhere/laminate to a metal layer comprising zinc.

A metal alloy comprising zinc and aluminum is used, with for example between 80 and 90 weight percentage zinc and between 10 and 20 weight percentage aluminum.
- fire retardant and/or antistatic properties. Aluminum provides good fire retardant properties and good antistatic properties.
- coating properties. Some metal or metal alloys can be more easily coated to a lignocellulose based substrate, to form said metal layer.
- thickness. If thin panels are desired, one could choose for better performing metals and/or metal alloys.

One can choose for a metal layer with at least two metal sublayers and this because one metal sublayer can for example well attach to the substrate while the other metal sublayer is more suitable for laminating the finishing layer upon is. Another possibility or additionally, one metal sublayer has better antistatic properties and one metal sublayer can have better fire retardant properties.

In a very preferred embodiment the metal alloy has been directly coated upon said surface of the substrate to form said metal layer. This ensures a good and direct contact between the lignocellulose based substrate and the metal layer, such that good antistatic properties and/or fire retardant properties can be obtained. This coating can be done inline. This coating could have been done by spray coating said metal alloy, preferably thermal spray coating, such as thermal spray coating by electrical arc wire. With spray coating, thin and uniform metal layers are obtained, which adheres and interact very well with for example the wood fibers or wood chips of a said lignocellulose based substrate. Also with the aid of spray coating different metal sublayers can be applied. Surprisingly, it was found that a said finishing layer adheres very well to a spray coated metal layer. Arc wire is standard available and with one type of arc wires different thicknesses can be applied. The coating could also have been applied using a roller, by means of curtain coating, by means of spreading, etc. By coating also non uniform metal layers can be easily applied.

In a very preferred embodiment the said surface of the substrate upon which the covering layer is attached, is a sanded surface. This ensures a good adherence between the metal layer and the said surface and also the fire retardant and/or antistatic properties can be improved in comparison with a non-sanded surface. This because a sanded surface will provide said surface with a certain relief which ensures good adherence.

In a preferred embodiment the metal layer has a thickness of at most 100 µm, preferably at most 50 µm and more preferably at most 10 µm. Said metal layer can be applied very thin, and still provide the required antistatic and/or fire retardant properties, and this because of its direct adherence to the substrate. The thickness will also depend on the used metal alloy, the presence of one or two or more metal sublayers and the desired properties. It has been found that for antistatic properties the thickness could be less than 10 µm, for example 1, 2, 3, 4, 5, 6, 7, 8 or 9 µm. For example one can have a copper metal layer of at most 5 µm. For fire retardant properties the thickness will depend on the desired fire retardant properties. For example, for increased fire retardant properties, one could have a metal layer of at least 10 µm, preferably at least 20 µm, more preferably at least 50 µm and most preferably at least 80 µm. The advantage of this panel when the metal layer is a coated metal layer, is that one can easily apply the desired thickness and alter between panels with different thicknesses of metal layers according to the desired end product. Production can be very flexible.

As already indicated the metal layer can be a one layered metal layer or a two layered metal layer comprising two metal sublayers. If said metal layer is a two layered metal layer, preferably one sublayer is coated on top of the other sublayer.

In a preferred embodiment, the finishing layer comprises at least one wear layer to increase the wear resistance and/or scratch resistance, such as a resin impregnated paper layer or a plastic layer or a lacquer layer or a net/scrim (e.g. a glass fiber matting). Said at least one wear layer could also protect against oxidation. Said finishing layer can consist of one layer. Of course it is possible that said finishing layer comprises two or more layers, for example two or more wear layers. A said metal layer is sensitive to scratches. By applying a wear layer, said metal layer is well protected and thus suitable to perform its function throughout the entire life-time of the panel. A said wear layer, for example a resin impregnated paper, can or cannot have wear resistant particles such as corundum and/or aluminum oxide. Said wear resistant particles preferably do not directly contact said metal layer, such that said metal layer cannot be damaged by said wear resistant particles. This can be done by providing a finishing layer with at least two resin impregnated papers, wherein the resin impregnated paper closest to the metal layer does not comprise said wear resistant particles. This can also be done by having one or two resin impregnated papers with only wear resistant particles at the height of one side of the paper. For example if one said resin impregnated paper is directly attached to said metal layer, the side of the paper which does not comprise wear resistant particles, is situated at the height of the metal layer. For example if two said resin impregnated paper are directly attached to said metal layer, the sides of the papers which comprise said wear resistant particles can be directed to each other such that said wear resistant particles are situated between the two paper layers of said resin impregnated papers. Another option is to attach the finishing layer with an additional glue layer to the metal layer. Said additional glue layer can consist of glue free from wear resistant particles or said additional glue layer can be a resin impregnated paper or a sheet that is free from wear resistant particles. The wear layer can be a plastic sheet with a sufficient thickness to provide the required wear resistance. This plastic sheet can be a thermoplastic sheet comprising PVC (polyvinylchloride), PP (polypropylene), PET (polyethyleneterephthalate), etc. The lacquer layer can be an UV curable lacquer layer and/or a PU (polyurethane) lacquer layer.

In a specific embodiment the finishing layer at least comprises one décor layer, such as a resin impregnated printed paper or a printed plastic foil or a resin impregnated colored paper. With the aid of this décor layer, said panel can have the desired look. Also other décor layers are possible, for example a timber layer or a veneer layer. This one décor layer could also be a print layer directly printed upon the metal layer or directly printed upon another layer of the finishing layer, for example digitally printed. The direct printing of said print layer upon the metal layer can be done in one step or multiple steps, for example first a primer can be printed upon the metal layer and later inks can be printed.

A said finishing layer can comprise one or more of the following layers, as long as not contradictory:
- a resin impregnated paper layer
- a thermoplastic based layer, being a layer comprising thermoplastic material as a binder material and optionally inorganic/organic fillers and optionally plasticizers material wherein the thermoplastic material can or cannot make up at least half of the weight of said layer, with the thermoplastic material being for example PVC, PP, PE, PET;
- a lacquer layer, which has been for example UV and/or heat cured;
- a veneer layer;
- an oil layer;
- a timber layer;
- a print layer, for example a print layer obtained by direct printing or a printed sheet or a printed paper. The printing can be done digitally or analogously;
- a kraft paper layer;
- a wear layer comprising for example wear resistant particles such as aluminum oxide particles or corundum;
- a foamed layer;
- a transparent layer;
- a scrim or a net, such as a glass fiber scrim.

The finishing layer can directly adhere to the metal layer.

In a specific embodiment the finishing layer is attached to the metal layer by an additional glue layer, for example a glue layer comprising a thermoset glue or a thermoplastic glue. This additional glue layer can be a glue impregnated sheet or not. For example the finishing layer can be a HPL (high pressure laminate) comprising different resin impregnated papers, such as a wear layer, a décor layer and additional kraft paper layers, wherein this HPL is made, namely pressed, separately and wherein this HPL is glued upon the metal layer. The gluing can be done with the aid of a continue or discontinue press. Of course instead of using an additional glue layer, said resin impregnated papers can be all pressed together with the substrate with the metal layer, for example a wear layer, a décor layer, the substrate with the coated metal layer, are all pressed at once, and this in a continue press or a discontinue press. If use is made of a discontinue press, a daylight press could be used, also referred to as a KT press (an abbreviation of the German for "short cycle press").

In a specific embodiment the finishing layer comprises a scrim or a net, such as a glass fiber scrim. This scrim or net can provide reinforcement to the panel and/or said scrim or net can provide additional fire retardant properties. This scrim or net can or cannot be embedded in resin, for example embedded in melamine resin or phenol resin.

In a specific embodiment the metal layer is a magnetic layer. With such a metal layer, the panel surface can have magnetic properties. Nowadays walls or furniture get painted with magnetic paint. However this is an additional treatment and magnetic paint is expensive. With the aid of this specific embodiment one can easily provide the panel, such as the wall panel or the furniture panel, with the required properties. Also if said metal layer is a coated metal layer, for example a spray coated metal layer, one can easily switch between different types of metal layers that need to be coated, such that one applies the desired metal layer. For example, for panels that will be used to form a wall or a furniture, one could only provide some panels (in part) with a magnetic layer and other panels with other metal layers and/or no metal layers. For example the metal coating machine could be present in the production line, but could only apply a said metal layer to the desired panels or parts of said desired panels. **In** this embodiment, it is possible that fire retardant and/or antistatic properties are not required, such that for this metal layer one should then not take into account these properties and it could be possible that this metal layer does not significantly add to the fire retardant and/or antistatic properties of the panel. For example, one could choose to apply a very thin magnetic layer and could have for example other measures to provide for flame-retardant properties and/or antistatic properties.

The at least one covering layer could be attached to the upper surface and form an upper covering layer.

The at least one covering layer could be attached to the lower surface panel and form a lower covering layer.

The panel could comprise two said covering layers, wherein one of said covering layers is attached to the upper surface and forms an upper covering layer and the other of said covering layers is attached to the lower surface and forms a lower covering layer. Further the said upper covering layer and the said lower covering layer could or could not be identical, or could at least have similar metal layers and/or similar finishing layers. If the covering layers perform the same or identical functions, for example if both said covering layers are provided for their antistatic and/or fire retardant and/or aesthetic properties, then said covering layers are preferably identical and mirrored with regard to the plane of the panel. However, it is also possible that the upper surface of the panel should have antistatic properties, while the bottom surface of the panel has fire retardant properties. Of course the covering layers could be taylor made for their required properties. If the metal layer is provided by coating, for example spray coating, one can easily choose for the required thickness and/or the number of sublayers and/or the applied metal alloy.

In an embodiment the finishing layer comprises electrically conductive additives. Examples of such electrically conductive additives are salts, such as alkali salts, or metal (alloy) particles and/or conductive fibers and/or esters, such as carbonic acid esters. With the aid of said electrically conductive additives, said finishing layer could contribute to the antistatic properties of the panel. For example with the aid of such a finishing layer, one could apply a thinner metal layer, or apply a metal layer comprising a metal alloy which is less conductive but for example less expensive.

According to a preferred embodiment the panel is provided on the edges thereof with a tongue and groove profiling. However, unprofiled sides, such as straight sides, are not excluded.

According to a first variant of the first aspect of the invention, instead of a lignocellulose based substrate, the substrate could be any other type of a rigid substrate. For example the substrate could comprises PUR (polyurethane)/PIR (polyisocyanurate) waste and a binder. Preferably this PUR waste or this PIR waste, is rigid PUR waste or rigid PIR waste. Rigid PUR and rigid PIR are used as insulation, for example for insulation panels or insulation roof elements. This waste can be from production, installation, transport, etc. but also from end-of-life insulation panels or insulation roof elements. It has been found that such rigid PIR/PUR can be shredded, and that this shredded PIR/PUR can be adhered with the aid of a binder and pressed into board. The binder can be an isocyanate glue, such as methylene diphenyl diisocyanate (MDI) glue or polymeric methyl diphenyl diisocyanate (pMDI) glue. Such boards have excellent waterproof properties and have a certain strength. Surprisingly it has been found that such boards can be used as an alternative substrate to the lignocellulose based substrate of the first aspect of the invention. A metal layer can for example be coated, preferably spray coated, upon said board. This metal layer ensures that other layers, such as resin impregnated paper layers can well adhere to the board. The substrate can also be a mineral based substrate, such as a MgO substrate, a cement fiber board or a gypsum fiber board. The substrate could also be a rigid thermoplastic based substrate, such as a substrate comprising inorganic fillers, such as chalk or limestone, and a thermoplastic material as a binder, such as PVC, wherein the weight ratio inorganic fillers to thermoplastic material is preferably higher than 1. All the embodiments described for the first aspect of the invention, also apply to this first variant.

According to a second variant of the first aspect of the invention, instead of a film or coating, the metal layer forms an electrical circuit. Electricity can here be conducted according to a desired path and this for example to an electric equipment that has been attached to the panel. With the aid of such a panel, lighting elements can be fitted to said panel, or charging points can be available upon said panel. This second variant can also be according to the first variant and can thus have, instead of a lignocellulose based substrate, a said other rigid substrate. A said covering layer of this second variant could or could not comprise a said finishing layer.

According to a second aspect, the invention relates to a method for the production of panels comprising a lignocellulose based substrate, such as a wood fiber board or a particle board, said substrate comprising an upper surface and a lower surface, and comprising at least one covering layer attached to the upper surface or the lower surface, wherein said covering layer comprises metal, wherein said method comprising the following steps:
- providing a lignocellulose substrate material comprising an upper surface and a lower surface;
- coating aluminum/zinc metal alloy upon the upper surface and/or the lower surface to form a metal layer;
- applying a finishing layer upon said metal layer, said finishing layer preferably comprising a wear resistant layer to provide wear resistance and/or scratch resistance.

It has been found that a metal layer which has been coated upon a lignocellulose based substrate, provides said substrate, and therefore the panel itself, with improved fire resistant and/or antistatic properties. This because the metal alloy is in direct contact with the said substrate. The preferred finishing layer, and more particularly the preferred wear resistant layer, protects the metal layer from scratches and/or damages, such that throughout the lifetime of the panel, the metal layer can perform its function. With the aid of this method, a panel according to the first aspect of the invention can be obtained. All the features and embodiments described for the first aspect, also apply to this second aspect. All features relating to the second aspect, could thus also apply to the first aspect.

Preferably, after the coating of the metal alloy upon the upper surface and/or the lower surface to form said metal layer, the other layers of the said panel, for example a said finishing layer, are attached to said coated substrate in one and the same pressing operation. If only one said metal layer is present upon the upper surface or the lower surface, then an additional layer upon respectively the lower surface or the upper surface can also be present. Preferably the finishing layer and said additional layer are then attached to the coated substrate in the same pressing operation.

Preferably, the coating of metal alloy is done by spray coating said metal alloy, preferably thermal spray coating, such as thermal spray coating by electrical arc wire. With spray coating, one could apply said metal alloy in a very precise manner and also with the desired thickness. With spray coating, one could apply uniform metal (sub)layers and also non uniform metal (sub)layers. For thermal spray coating by electrical arc wire, one has to provide wires of the desired metal alloy. One can very easily provide the desired type of wire, for example wires consisting of aluminum, wires consisting of copper, wires consisting of zinc, wires consisting of zinc/copper alloy, wires consisting of nickel, wires comprising gold, wires consisting of silver, etc. For wires consisting of one metal, this indicates that said wire is substantially pure and preferably has at least 99 weight percentage of said metal. For example a copper wire can comprise 99,9 weight percentage copper, with the other 0,1 weight percentage being impurities. Thermal spray coating by arc wire is thus a very flexible method step, such that the desired metal layer can always be applied in the correct manner. Further with thermal spray coating by arc wire, one can easily apply two or more sublayers of metal or metal alloy to form said metal layer.

In a specific embodiment the finishing layer at least comprises a layer comprising a sheet, such as a resin impregnated paper sheet and/or a plastic sheet, wherein said finishing layer or at least said sheet of the finishing layer is preferably laminated upon said metal layer. Said finishing layer or at least said sheet of the finishing layer can be directly laminated upon said metal layer, indicating that no additional glue or glue layer is used. Of course indirect lamination, meaning that an additional glue or glue layer is used, is also possible. Surprisingly, it has been found that such a coated metal layer is very suitable to attach other layers to it by lamination. The coating of a metal layer can therefore be very easily implemented in existing production lines. For example if the panel is a mezzanine panel, a wall panel or furniture panel, then a coating device capable of coating said metal layer can be very easily placed between the production devices of a particle board substrate or MDF/HDF board and the devices which ensure lamination of a said finishing layer comprising one or more resin impregnated papers. A said resin impregnated paper sheet and/or a plastic sheet can be a wear layer and/or a décor layer. For example it can be a printed paper sheet or a printed plastic sheet or a colored sheet, and as such provide the panel with the desired appearance. It can comprise wear resistant particles such as aluminum oxide or corundum. If this is the case, it is preferred that the wear resistant particles do not directly contact the metal layer. This can be done by providing an additional layer between said metal layer and said layer comprising wear resistant particles. This can also be done by providing the wear resistance particles on one side of the paper or sheet (if present), and this at the height of the side of said paper or sheet which faces away from the metal layer. Use can be made of a sufficiently thick plastic sheet to provide the required wear resistance. A décor can also be directly print upon the metal layer, wherein said direct print than forms a print layer.

In a specific embodiment the finishing layer is attached to the metal layer by an additional glue layer. This can be the case if the finishing layer is a HPL or comprises a veneer/timber.

In a specific embodiment the wear resistant layer comprises a scratch resistance lacquer layer, wherein said lacquer layer is preferably coated, for example spray coated. Spray coating of said lacquer layer can be done directly upon said metal layer.

According to a third aspect, the invention relates to a panel, more specifically a load-bearing panel, and even more specifically a mezzanine floor panel, wherein this panel comprises a lignocellulose based substrate, such as a wood fiber board or a particle board, said substrate comprising an upper surface and a lower surface, and at least a first electrically conductive covering layer attached to the upper surface, said first electrically conductive layer comprising electrically conductive material, wherein the panel comprises a second electrically conductive covering layer attached to the lower surface, said second electrically conductive covering layer comprising electrically conductive material.

A said electrically conductive covering layer is capable of conducting electricity and can therefore also be indicated as an antistatic layer. Said panels are suitable to be used as load-bearing panels, such as mezzanine floor panels. In the state of the art said panels comprise an upper surface which is preferably electrically conductive and these panels are typically connected to a metal frame with specific metallic connecting elements, such that static electricity, which can for example be generated by AGV's (Automated Guided Vehicles) that move upon said panels, can be conducted to the ground surface. A disadvantage is that one needs specific metallic connecting elements and that connecting said panels with such connecting elements to the metal frame is time consuming. Surprisingly we found that by also providing the lower surface with an electrically conductive layer, one does no longer require specific metallic connecting element to connect said panels with metal frames, if one wishes good antistatic properties. Here such panels can be connected with metallic frame elements by bolts or screws that are generally available. The only requirement is that these bolts or screws are electrically conductive, for example made from metal or metal coated.

Said electrically conductive layers can be identical layers and are then preferably mirrored with regard to a plane of the panel, but this is not a requirement. In an embodiment the conductivity of said layers is similar. In another embodiment the conductivity of said layers is not similar.

In the prior art, to have sufficient antistatic properties, specific connecting members were used to conduct the electricity away from mezzanine panels. For example said connecting member could comprise a copper nut and a specific screw. Surprisingly, we found that by not only providing one electrically conductive layer, but two electrically conductive layers, said panels can be connected with standard connecting elements, such as screws comprising metal and this without the risk that static electricity will accumulate.

In a very specific embodiment the first and/or the second covering layer comprise melamine or another thermoset resin. Such covering layers can be easily applied to the lignocellulose based substrate, for example laminated to it with the aid of a continue or discontinue press. The covering layer can for example comprise a melamine resin impregnated paper sheet.

Preferably the first and/or the second covering layer comprises electrically conductive additives. These conductive additives could comprise salts, such as alkali salts, or metal (alloy) particles and/or conductive fibers and/or esters, such as carbonic acid esters. Further preferably the first and/or the second covering layer comprise a resin impregnated paper, wherein said conductive additives are at least partially embedded in the resin. The resin is preferably a thermoset resin and can be for example be a melamine resin. Said conductive additives could also be named antistatic additives. For example the conductive additives could be antistatic particles.

In a specific embodiment the first and/or the second covering layer can comprise conductive polymers. For example the first and/or second covering layer can comprise an intrinsically conductive polymer sublayer, for example a polyaniline layer.

Further a said resin impregnated paper sheet could comprise wear resistant particles, such as aluminum oxide or corundum. For example the covering layer could comprise one resin impregnated paper with wear resistant particles. If said one resin impregnated paper with wear resistant particles forms the outer layer of the panels, said wear resistant particles are preferably located at the side of the paper located closed to the substrate. Said covering layer could also comprise two resin impregnated papers with wear resistant particles that are connected on top of each other. In this case preferably, the wear resistant layers of both resin impregnated papers are located between said two papers.

In a specific embodiment the first and/or the second covering layer comprises a metal layer which forms at least partially said electrically conductive material, wherein said metal layer is for example a metal foil or a metal coating. Said metal layer could be a metal coating comprising metal alloy. Preferably said metal layer is directly attached to the substrate, such that the panel is also a panel according to the first aspect of the invention. The panel is then preferably made with a method according to the second aspect of the invention. The metal layer could also be a metal foil, such as an aluminum foil, which is attached to the substrate with a separate glue layer. This aluminum foil could have a thickness of between 10 µm and 100 µm.

In a specific embodiment the first and/or the second covering layer comprises a scrim or a net, such as a glass fiber scrim. This scrim or net can provide reinforcement to the panel and/or said scrim or net can provide fire retardant properties. This scrim or net can or cannot be embedded in resin, for example embedded in melamine resin or a phenol resin.

According to a variant of the third aspect, instead of a lignocellulose based substrate, the substrate can be another rigid substrate. For example the substrate can comprise PUR/PIR waste and a binder. Preferably this PUR waste or this PIR waste, is rigid PUR waste or rigid PIR waste. Rigid PUR and rigid PIR are used as insulation, for example for insulation panels or insulation roof elements. This waste can be from production, installation, transport, etc. but also from end-of-life insulation panels or insulation roof elements. It has been found that such rigid PIR/PUR can be shredded, and that this shredded PIR/PUR can be adhered with the aid of a binder and pressed into a board. The binder can be an isocyanate glue, such as methylene diphenyl diisocyanate (MDI) glue or polymeric methyl diphenyl diisocyanate (pMDI) glue. Such boards have excellent waterproof properties and have a certain strength. Surprisingly it has been found that such boards can be used as an alternative substrate to the lignocellulose based substrate of the third aspect of the invention. The substrate can also be a mineral based substrate, such as a MgO substrate, a cement fiber board or a gypsum fiber board. The substrate could also be a rigid thermoplastic based substrate, such as a substrate comprising inorganic fillers, such as chalk or limestone, and a thermoplastic material as a binder, such as PVC, wherein the weight ratio inorganic fillers to thermoplastic material is preferably higher than 1. All the embodiments described for the third aspect of the invention, also apply to this variant.

According to a preferred embodiment, the panel is provided on the edges thereof with a tongue and groove profiling. However, unprofiled sides, such as straight sides, are not excluded.

According to a fourth aspect, the invention relates to a connection system, comprising a panel, a support for supporting the panel and an electrically conductive connecting member for fastening the panel and the support to each other, wherein the connecting member comprises a head and a shank with a tubular shaped part, having a first diameter and having preferably outer tread, and wherein the panel comprises at least a lignocellulose based substrate comprising an upper surface and a lower surface, and at least a first electrically conductive covering layer attached to the upper surface which, in a fastened position of the connection system, faces away from the support, wherein this first electrically conductive covering layer comprises electrically conductive material and said first covering layer has a lower electrical conductivity than the connecting member, wherein, in the fastened position of the connection system, the head contacts the first covering layer and the shank passes through the panel and is fastened to the support in such a way that the panel is retained between the head and the support, wherein preferably the head is provided with a flange which, in the fastened position of the connection system, bears against first covering layer. Such a specific shaped connecting member is very suitable to conduct static electricity from the upper surface of the panel to the support. The panels can have matching coupling parts to connect said panels to each other. Said connecting member is preferably designed as a screw. Said connecting member can be made out of brass, (stainless) steel, iron, etc.

In a very preferred embodiment, the panel is a panel according to the first aspect and/or the third aspect and more preferably the panel is made according to a method according to the second aspect.

In a preferred embodiment the flange is circular shaped with a second diameter and the head further comprises a connecting part, which connects said flange to said shank, wherein said connecting part diverges from the shank towards the flange in such a way that at the height of the shank, the connecting part has a diameter similar or equal to the first diameter and with the same center, and that at the height of the flange, the connecting part has a third diameter which is at least twice the first diameter and at most 70 percent of the second diameter, and with the same center. Preferably said flange is in direct contact with the first covering layer. The shank may be provided with screw thread for screwing the shank into the support. This may be a self-tapping screw thread.

Further preferably, the connecting part, on its outward facing side, comprising protruding parts, for example protruding ribs, directed from the shank to the flange. Such a screw can be well applied at the desired height into the panel and will adhere very good in the panel.

With the intention of better showing the characteristics of the invention, herein below, as an example without any limitative character, some embodiments are described, with reference to the following figures:
- ***figure 1*** is an exploded view of a cross section of a panel according to a first embodiment of the first aspect of the invention, which is also according to the third aspect;
- ***figure 2*** is a cross section of the panel shown in figure 1;
- ***figure 3*** is a cross section of a panel according to a second embodiment of the first aspect of the invention, wherein this panel is also according to the third aspect;
- ***figure* 4** is a cross section of a panel according to a third embodiment of the first aspect of the invention, wherein this panel is also according to the third aspect;
- ***figure 5*** is a cross section of a panel according to a fourth embodiment of the first aspect of the invention, wherein this panel is also according to the third aspect;
- ***figure* 6** is a cross section of a panel according to the third aspect of the invention;
- ***figure* 7** is a cross section of a panel according to a fifth embodiment of the first aspect of the invention;
- ***figure 8*** is a schematic view of a connection system according to the fourth aspect of the invention, comprising panels according to the first and/or third aspect of the invention;
- ***figure* 9** is a detailed view of figure 8, showing the connection between a panel and a support with a specific screw;
- ***figure 10*** is a front view of the screw shown in figure 9.

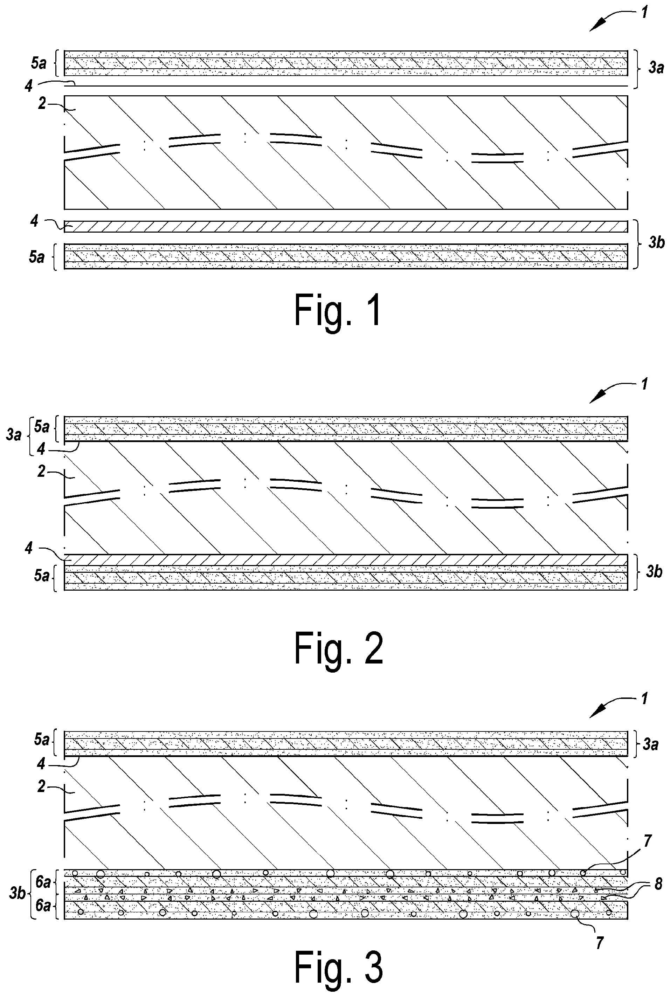

Figures 1 and 2 describe a first embodiment of a panel 1 according to the first aspect of the invention. This panel 1 comprises, seen from the top to the bottom, a top layer 3a, a wood based substrate 2, preferably particle board or MDF/HDF, and a bottom layer 3b. The top layer 3a and the bottom layer 3b are electrically conductive covering layers 3a, 3b as disclosed in the third aspect of the invention and also covering layers 3a, 3b as disclosed in the first aspect of the invention. The substrate 2 comprises an upper surface and a lower surface, with the top layer 3a directly adhered to the upper surface and the bottom layer 3b directly adhered to the lower surface. The upper surface and the bottom surface are preferably sanded surfaces. The top layer 3a, seen from the top to the bottom, comprises a resin impregnated paper 5a and a metal layer 4, the resin impregnated paper 5a forming a finishing layer 5a which protects the metal layer 4. The bottom layer 3b comprises, seen from the top to the bottom, a metal layer 4 and a resin impregnated paper 5a, the resin impregnated paper 5a forming a finishing layer 5a which protects the metal layer 4. As can be seen form figures 1 and 2 the thickness of the metal layer 4 of the top layer 3a, is thinner than the thickness of the metal layer 4 of the bottom layer 3b.

Both metal layers 4 preferably have been directly coated to respectively the upper surface and the lower surface of the substrate 2 and this by means of thermal spray coating by electrical arc wire. The metal layers 4 can be one layered, two layered or multilayered. The metal layer 4 of the top layer 3a is a thin metal layer 4 having a thickness of less than 10 µm, preferably less than 5 µm, more preferably less than 3 µm and is preferably one-layered. The function of this thin metal layer 4 is to provide antistatic properties to the top surface of the panel 1. This thin metal layer 4 preferably consists of copper, but it can also consist of a metal alloy comprising copper, such as a zinc/copper alloy. Of course this thin metal layer 4 could also consist of aluminum or another metal or metal alloy. The metal layer 4 of the bottom layer 3b is a thick metal layer 4 having a thickness of at least 30µm, preferably at least 50 µm and more preferably at least 80 µm. The main function of this metal layer 4 is to provide fire retardant properties to the panel 1, but it can also contribute to the antistatic properties of the panel 1. This thick metal layer 4 can have one layer and can for example consist of aluminum or consist of a metal alloy comprising for example aluminum and zinc. This thick metal layer 4 can also comprise at least two sublayers, with the uppermost sublayer being more suitable to adhere to the substrate 2 and the lowermost sublayer being more suitable to adhere to the resin impregnated paper 5a. Since both the top layer 3a and the bottom layer 3b comprise metal, said layers 3a, 3b are also electrically conductive layers and this panel 1 is also according to the third aspect of the invention. The resin impregnated papers 5a preferably comprise colored and/or printed papers, such that said resin impregnated papers 5a give the desired look to the panel 1. Further said resin impregnated papers 5a protect the respective metal layers 4.

Figure 3 shows a second embodiment of a panel 1 according to the first aspect of the invention. This panel 1 comprises from the top to the bottom, a top layer 3a, a substrate 2, which can have the same features of the substrate 2 of the first embodiment, and a bottom layer 3b. The top layer 3a and the bottom layer 3b are electrically conductive covering layers 3a, 3b as disclosed in the third aspect of the invention and the top layer 3a is also an upper covering layer 3a as disclosed in the first aspect of the invention. The substrate 2 comprises an upper surface and a lower surface, with the top layer 3a directly adhered to the upper surface and the bottom layer 3b directly adhered to the lower surface. The upper surface and the bottom surface are preferably sanded surfaces. As can be seen in figure 3 the top layer 3a looks like the top layer 3a shown in figure 2. All the features of the top layer 3a of the panel 1 of the first embodiment, also apply to the top layer 3a of the panel 1 of the second embodiment. The bottom layer 3b comprises two resin impregnated papers 6a comprising wear resistant particles 8 and antistatic/electrically conductive particles 7. The wear resistant particles 8 can be corundum and the antistatic/electrically conductive particles 7 can be alkali salts. Of course embodiments wherein the bottom layer 3b only comprises one such resin impregnated paper 6a are also possible. Embodiments were the said resin impregnated papers 6a do not comprise wear resistant particles 8 or do not comprise antistatic/electrically conductive particles 7 are also possible. Since both the top layer 3a and the bottom layer 3b comprise electrically conductive material, namely respectively the metal and/or metal alloy and the antistatic particles 7, said layers 3a, 3b are also electrically conductive layers and this panel 1 is also according to the third aspect of the invention. At least one of said resin impregnated papers 6a preferably comprises a colored and/or printed paper, such that said resin impregnated paper 6a gives the desired look to the panel 1. Further at least the lowermost resin impregnated paper 6a comprises said wear resistant particles 8 such as the protect the panel 1. More preferably both said resin impregnated papers 6a comprises said wear resistant particles 8, and further preferably said wear resistant particles 8 are located between both papers of said resin impregnated papers 6a. This is also the embodiment shown in figure 3. Said wear resistant particles 8 cannot harm the press, should this panel 1 be made in a continue or discontinue press. Had there been a metal layer 4 present between said substrate 2 and the two resin impregnated papers 6a, said wear resistant particles 8 would also not harm said metal layer 4.

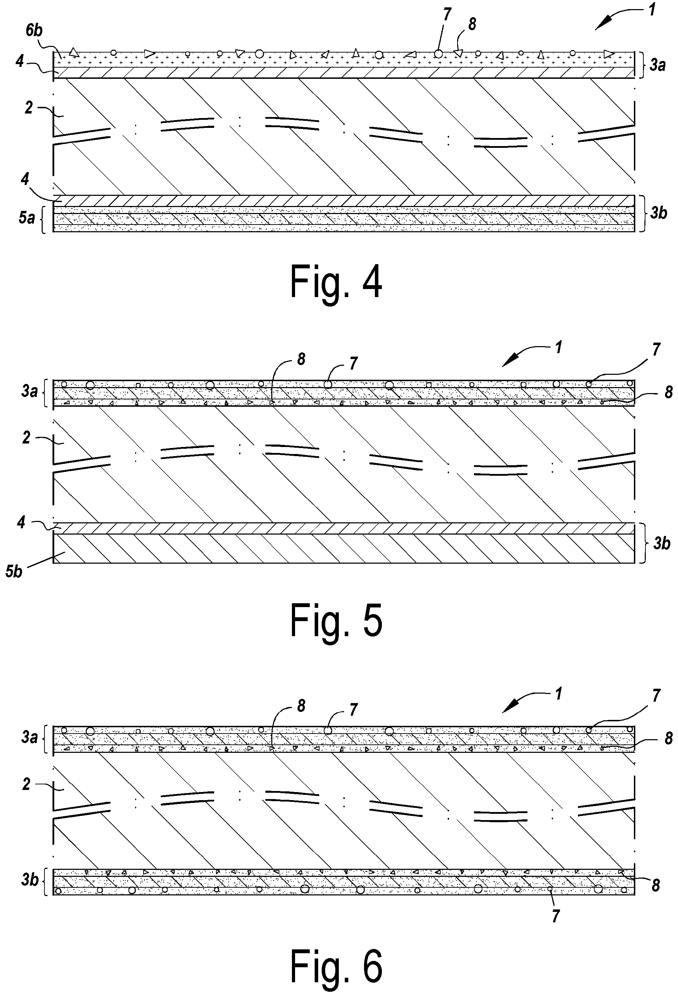

Figure 4 describes a third embodiment of a panel 1 according to the first aspect of the invention. This panel 1 comprises, seen from the top to the bottom, a top layer 3a, a wood based substrate 2, which can be the same substrate 2 as in the first embodiment, and a bottom layer 3b. The top layer 3a and the bottom layer 3b are electrically conductive covering layers 3a, 3b as disclosed in the third aspect of the invention and also covering layers 3a, 3b as disclosed in the first aspect of the invention. The substrate 2 comprises an upper surface and a lower surface, with the top layer 3a directly adhered to the upper surface and the bottom layer 3b directly adhered to the lower surface. The upper surface and the bottom surface are preferably sanded surfaces. The top layer 3a, seen from the top to the bottom, comprises a thermoplastic based layer 6b and a metal layer 4. This thermoplastic based layer 6b comprises thermoplastic material such as PVC, PP, PE or PET and wear resistant particles 8 and antistatic/electrically conductive particles 7. The wear resistant particles 8 can be corundum and the antistatic/electrically conductive particles 7 can be alkali salts. The thermoplastic based layer 6b forms a finishing layer 6b that protects said metal layer 4. Embodiments were the said thermoplastic based layer 6b does not comprise wear resistant particles 8 or does not comprise antistatic/electrically conductive particles 7 are also possible. The thermoplastic based layer 6b can directly adhere to said metal layer 4 or a separate glue (not shown) can be used. The bottom layer 3b comprises, seen from the top to the bottom, a metal layer 4 and a resin impregnated paper 5a. As can be seen, the thickness of the metal layer 4 of the top layer 3a is approximately the same as the thickness of the metal layer 4 of the bottom layer 3b. Of course embodiments were said thicknesses are not the same are also possible. The said resin impregnated paper 5a can be the same resin impregnated paper 5a as shown in figure 2 at the bottom of said panel 1 and forms a finishing layer 5a that protects said metal layer 4.

Both metal layers 4 preferably have been directly coated to respectively the upper surface and the lower surface of the substrate 2 and this by means of thermal spray coating by electrical arc wire. The metal layers 4 can have the same features as disclosed for the first embodiment. Since both the top layer 3a and the bottom layer 3b comprise metal, said layers 3a, 3b are also electrically conductive layers and this panel 1 is also according to the third aspect of the invention.

Figure 5 describes a fourth embodiment of a panel 1 according to the first aspect of the invention. This panel 1 comprises, seen from the top to the bottom, a top layer 3a, a wood based substrate 2, which can be the same substrate 2 as in the first embodiment, and a bottom layer 3b. The top layer 3a and the bottom layer 3b are electrically conductive covering layers 3a, 3b as disclosed in the third aspect of the invention and the bottom layer 3b forms a lower covering layer 3b as disclosed in the first aspect of the invention. The substrate 2 comprises an upper surface and a lower surface, with the top layer 3a directly adhered to the upper surface and the bottom layer 3b directly adhered to the lower surface. The upper surface and the bottom surface are preferably sanded surfaces. The top layer 3a comprises a resin impregnated paper 6a comprising wear resistant particles 8 and antistatic particles 7 as disclosed in figure 3. The bottom layer 3b comprises, seen from the top to the bottom, a metal layer 4 and a thermoplastic based layer 5b. This thermoplastic based layer 5b can be plastic foil with a certain color and/or print. This thermoplastic based layer 5b forms a finishing layer 5b which protect the metal layer 4. The metal layer 4 can have the same characteristics as the metal layer 4 of the bottom layer 3b of the first embodiment. Since both the top layer 3a and the bottom layer 3b are electrically conductive layers, this panel 1 is also according to the third aspect of the invention.

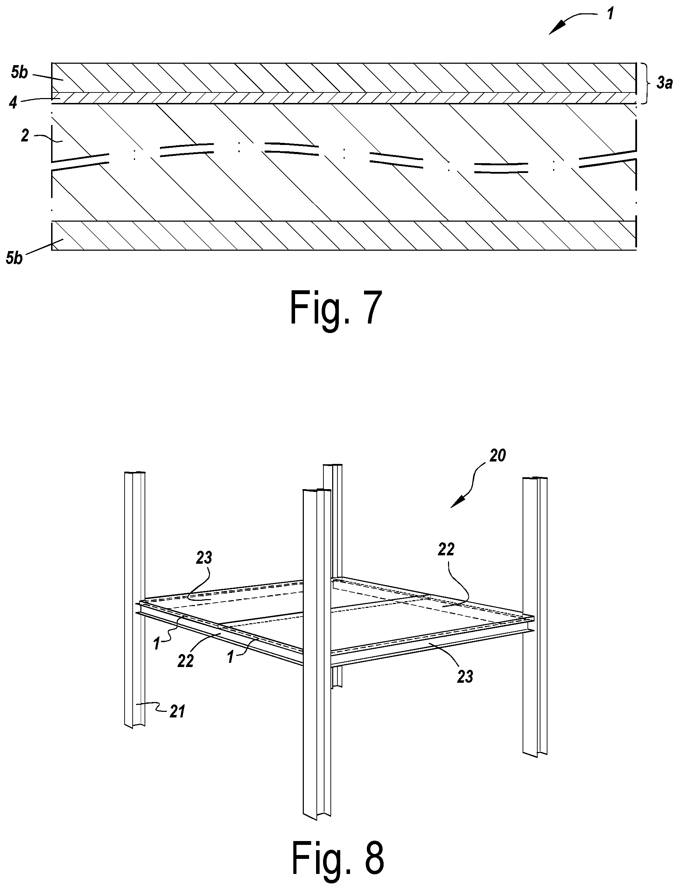

Figure 7 describes a fifth embodiment of a panel 1 according to the first aspect of the invention. This panel 1 comprises, seen from the top to the bottom, a top layer 3a, a wood based substrate 2, which can be the same substrate 2 as in the first embodiment, and a bottom layer 3b. The top layer 3a forms an upper covering layer 3a as disclosed in the first aspect of the invention. The substrate 2 comprises an upper surface and a lower surface, with the top layer 3a directly adhered to the upper surface and the bottom layer 3b directly adhered to the lower surface. The upper surface and the bottom surface are preferably sanded surfaces. The top layer 3a comprises a thermoplastic based layer 5b as disclosed in figure 5 and a metal layer 4. This thermoplastic based layer 5b forms a finishing layer 5b which protects the metal layer 4. The bottom layer 3b comprises a thermoplastic based layer 5b which can have the same characteristics as the thermoplastic based layer 5b of the top layer 3a. This thermoplastic based layer 5b can be plastic foil with a certain color and/or print. The metal layer 4 can have the same characteristics as the metal layer 4 of the bottom layer 3b of the first embodiment.

Figure 6 shows an embodiment of a panel 1 according to the third aspect of the invention. This panel 1 comprises, seen from the top to the bottom, a top layer 3a, a wood based substrate 2, which can be the same substrate 2 as in the first embodiment, and a bottom layer 3b. The substrate 2 comprises an upper surface and a lower surface, with the top layer 3a directly adhered to the upper surface and the bottom layer 3b directly adhered to the lower surface. The upper surface and the bottom surface are preferably sanded surfaces. The top layer 3a and the bottom layer 3b both consist of a resin impregnated paper 6a comprising wear resistant particles 8 and antistatic particles 7 as disclosed in figure 3, such that the top layer 3a and the bottom layer 3b are electrically conductive covering layers 3a, 3b. The wear resistant particles 8 are located on the side of the paper located towards the substrate 2, such that they are located between the respective paper and the substrate 2. The antistatic particles 7 are located on the side of the respective paper located away from the substrate 2.

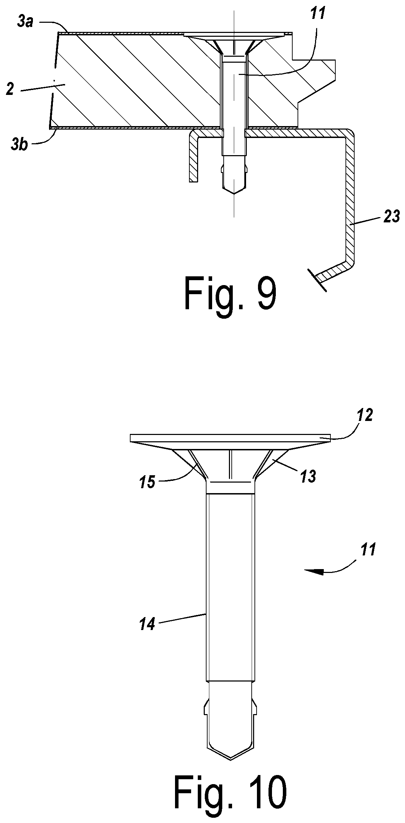

Figure 8 shows how the panels 1 shown in figures 1 to 7 can be used as mezzanine panels 1. Here the panels 1 are part of a connecting system 20 as disclosed in the fourth aspect of the invention. This connecting system 20 further comprises a support 21, 22, 23 comprising vertical beams 21 and horizontal beams 22, 23, for supporting the panels 1. Said panels 1 are further connected to said horizontal beams 22, 23 with electrically conductive screws 11 for fastening the panel 1 and the support 21, 22, 23 to each other. Said screw 11 comprises a head and a shank 14 with a tubular shaped part, having a first diameter and having preferably outer tread. The head contacts the top layer 3a of a said panel 1 and the shank 14 passes through the panel 1 and is fastened to the support 21, 22, 23 in such a way that the panel 1 is retained between the head and the support 21, 22, 23. The head is provided with a flange 12 which, in the fastened position of the connection system 20, bears against top layer 3a. This is visible in figure 9. Further the flange 12 is circular shaped with a second diameter and the head further comprises a connecting part 13, which connects said flange 12 to said shank 14, wherein said connecting part 13 diverges from the shank 14 towards the flange 12 in such a way that at the height of the shank 14, the connecting part 13 has a diameter similar or equal to the first diameter and with the same centre, and that at the height of the flange 12, the connecting part 13 has a third diameter which is at least twice the first diameter and at most 70 percent of the second diameter, and with the same centre. The connecting part 13, on its outward facing side, comprising protruding parts 15, for example protruding ribs 15, directed from the shank 14 to the flange 12.

The present invention is by no means limited to the above-described embodiments, but can be realized according to various variants without departing from the scope of the invention which is defined in the appended claims.

## Claims

1. A panel, wherein said panel (1) comprises at least a lignocellulose based substrate (2), such as a wood fiber board or a particle board, said substrate (2) comprising an upper surface and a lower surface, and at least one covering layer (3a, 3b) attached to the upper surface or the lower surface, wherein said covering layer (3a, 3b) comprises a metal layer (4), wherein said metal layer (4) directly adheres to the respective surface of the substrate (2) and forms a film or coating that covers said surface of the substrate (2), **characterized in that** said metal layer comprises an aluminum/zinc alloy, and wherein said covering layer (3a, 3b) further comprises a finishing layer (5a, 5b, 6a, 6b) which forms an outer side of the panel (1), wherein said metal layer (4) adheres to said finishing layer (5a, 5b, 6a, 6b).

2. The panel according to claim 1, wherein said metal layer (4) comprises at least 90 weight percentage by weight of said aluminum/zinc metal alloy.

3. The panel according to claim 1 or 2, wherein said finishing layer (5a, 5b, 6a, 6b) comprises a resin impregnated paper sheet, for example a melamine impregnated paper sheet.

4. The panel according to any of the preceding claims, wherein said aluminum/zinc metal alloy has been directly coated upon said surface of the substrate (2) to form said metal layer (4).

5. The panel according to any of the preceding claims, wherein the metal layer (4) has a thickness of at most 100 µm, preferably at most 50 µm and more preferably at most 10 µm.

6. The panel according to any of the preceding claims, wherein the said surface of the substrate (2) upon which the covering layer (3a, 3b) is attached, is a sanded surface.

7. The panel according to any of the preceding claims, wherein the metal layer (4) is a one layered metal layer.

8. The panel according to any of the preceding claims, wherein said aluminum/zinc metal alloy has between 80 and 90 weight percentage of zinc and between 10 and 20 weight percentage of aluminum.

9. A method for the production of panels comprising a lignocellulose based substrate (2), such as a wood fiber board or a particle board, said substrate (2) comprising an upper surface and a lower surface, and comprising at least one covering layer (3a, 3b) attached to the upper surface or the lower surface, wherein said covering layer (3a, 3b) comprises metal, wherein said method comprising the following steps:
- providing a lignocellulose substrate material comprising an upper surface and a lower surface;
- coating aluminum/zinc metal alloy upon the upper surface and/or the lower surface to form a metal layer;
- applying a finishing layer upon said metal layer, said finishing layer preferably comprising a wear resistant layer to provide wear resistance and/or scratch resistance.

10. The method for the production of panels according to claim 9, wherein the coating of aluminum/zinc metal alloy is done by spray coating said aluminum/zinc metal alloy, preferably thermal spray coating, such as thermal spray coating by electrical arc wire.

11. The method for the production of panels according to claim 9 or 10, wherein the finishing layer at least comprises a resin impregnated paper sheet, wherein said resin impregnated paper sheet of the finishing layer is laminated upon the metal layer.

## Patentansprüche

1. Paneel, wobei das oben genannte Paneel (1) Folgendes umfasst: zumindest ein Substrat (2) auf Basis von Lignocellulose, wie beispielsweise eine Holzfaserplatte oder eine Spanplatte, wobei das oben genannte Substrat (2) eine obere Oberfläche und eine untere Oberfläche umfasst, und zumindest eine Deckschicht (3a, 3b), die an der oberen Oberfläche oder der unteren Oberfläche befestigt ist; wobei die oben genannte Deckschicht (3a, 3b) eine Metallschicht (4) umfasst; wobei die oben genannte Metallschicht (4) direkt an der jeweiligen Oberfläche des Substrats (2) haftet und einen Film oder eine Beschichtung bildet, der bzw. die die oben genannte Oberfläche des Substrats (2) bedeckt; **dadurch gekennzeichnet, dass** die oben genannte Metallschicht eine Aluminium/Zink-Legierung umfasst; und wobei die oben genannte Deckschicht (3a, 3b) ferner eine Fertigstellungsschicht (5a, 5b, 6a, 6b) umfasst, die eine äußere Seite des Paneels (1) bildet; wobei die oben genannte Metallschicht (4) an der oben genannten Fertigstellungsschicht (5a, 5b, 6a, 6b) haftet.

2. Paneel nach Anspruch 1, wobei die oben genannte Metallschicht (4) mindestens 90 Gewichtsprozent der oben genannten Metalllegierung auf Basis von Aluminium/Zink umfasst.

3. Paneel nach Anspruch 1 oder 2, wobei die oben genannte Fertigstellungsschicht (5a, 5b, 6a, 6b) einen mit Harz imprägnierten Papierbogen, z.B. einen mit Melamin imprägnierten Papierbogen, umfasst.

4. Paneel nach einem der vorhergehenden Ansprüche, wobei die oben genannte Metalllegierung auf Basis von Aluminium/Zink direkt auf die oben genannte Oberfläche des Substrats (2) aufgetragen wurde, um die oben genannte Metallschicht (4) zu erzielen.

5. Paneel nach einem der vorhergehenden Ansprüche, wobei die Metallschicht (4) eine Dicke aufweist, die höchstens 100 µm, vorzugsweise höchstens 50 µm und mehr bevorzugt höchstens 10 µm beträgt.

6. Paneel nach einem der vorhergehenden Ansprüche, wobei die oben genannte Oberfläche des Substrats (2), an der die Deckschicht (3a, 3b) befestigt ist, eine Oberfläche ist, die sandgestrahlt wurde.

7. Paneel nach einem der vorhergehenden Ansprüche, wobei die Metallschicht (4) eine Metallschicht vom Einschichttyp ist.

8. Paneel nach einem der vorhergehenden Ansprüche, wobei die oben genannte Metalllegierung auf Basis von Aluminium/Zink zwischen 80 und 90 Gewichtsprozent Zink und zwischen 10 und 20 Gewichtsprozent Aluminium aufweist.

9. Verfahren zur Herstellung von Paneelen, die ein Substrat (2) auf Lignocellulosebasis umfassen, wie beispielweise eine Holzfaserplatte oder eine Spanplatte, wobei das oben genannte Substrat (2) eine obere Oberfläche und eine untere Oberfläche umfasst, und die mindestens eine Deckschicht (3a, 3b) umfassen, die an der oberen Oberfläche oder der unteren Oberfläche befestigt ist; wobei die oben genannte Deckschicht (3a, 3b) Metall umfasst; wobei das Verfahren die folgenden Schritte umfasst, bei denen:
- ein Substratmaterial auf Basis von Lignocellulose bereitgestellt wird, das eine obere Oberfläche und eine untere Oberfläche umfasst;
- die obere Oberfläche und/oder die untere Oberfläche mit einer Metalllegierung auf Basis von Aluminium/Zink beschichtet wird, um eine metallische Schicht zu erzielen;
- eine Fertigstellungsschicht auf die Metallschicht aufgebracht wird; wobei die Fertigstellungsschicht vorzugsweise eine Schicht umfasst, die verschleißfest ist, um eine Verschleißfestigkeit und/oder Kratzfestigkeit zu erzielen.

10. Verfahren zur Herstellung von Paneelen nach Anspruch 9, wobei die Beschichtung mit der Metalllegierung auf Basis von Aluminium/Zink durch eine Sprühbeschichtung, vorzugsweise eine thermische Sprühbeschichtung, wie eine thermische Sprühbeschichtung mit Hilfe eines Lichtbogens mit der oben genannten Metalllegierung auf Basis von Aluminium/Zink durchgeführt wird.

11. Verfahren zur Herstellung von Paneelen nach Anspruch 9 oder 10, wobei die Fertigstellungsschicht zumindest einen mit Harz imprägnierten Papierbogen umfasst; wobei der oben genannte mit Harz imprägnierte Papierbogen der Fertigstellungsschicht durch Laminierung auf der Metallschicht aufgebracht wird.

## Revendications

1. Panneau, dans lequel ledit panneau (1) comprend : au moins un substrat (2) à base de lignocellulose, tel qu'une planche à base de fibres de bois ou une planche à base de particules agglomérées, dans lequel ledit substrat (2) comprend une surface supérieure et une surface inférieure ; et au moins une couche faisant office de revêtement (3a, 3b) qui est fixée à la surface supérieure ou à la surface inférieure ; dans lequel ladite couche faisant office de revêtement (3a, 3b) comprend une couche métallique (4) ; dans lequel ladite couche métallique (4) adhère de manière directe à la surface respective du substrat (2) et forme un film ou un revêtement qui recouvre ladite surface du substrat (2) ; **caractérisé en ce que** ladite couche métallique comprend un alliage à base d'aluminium/zinc ; et dans lequel ladite couche faisant office de revêtement (3a, 3b) comprend en outre une couche de finition (5a, 5b, 6a, 6b) qui forme un côté externe du panneau (1) ; dans lequel ladite couche métallique (4) adhère à ladite couche de finition (5a, 5b, 6a, 6b).

2. Panneau selon la revendication 1, dans lequel ladite couche métallique (4) comprend au moins 90 pour cent en poids dudit alliage métallique à base d'aluminium/zinc.

3. Panneau selon la revendication 1 ou 2, dans lequel ladite couche de finition (5a, 5b, 6a, 6b) comprend une feuille de papier imprégnée de résine, par exemple une feuille de papier imprégnée de mélamine.

4. Panneau selon l'une quelconque des revendications précédentes, dans lequel ledit alliage métallique à base d'aluminium/zinc a été enduit directement sur ladite surface du substrat (2) afin d'obtenir ladite couche métallique (4).

5. Panneau selon l'une quelconque des revendications précédentes, dans lequel la couche métallique (4) possède une épaisseur qui s'élève au maximum à 100 µm, de préférence au maximum à 50 µm et de manière plus préférée au maximum à 10 µm.

6. Panneau selon l'une quelconque des revendications précédentes, dans lequel ladite surface du substrat (2), sur laquelle est fixée la couche faisant office de revêtement (3a, 3b), est une surface qui a été sablée.

7. Panneau selon l'une quelconque des revendications précédentes, dans lequel la couche métallique (4) est une couche métallique de type monocouche.

8. Panneau selon l'une quelconque des revendications précédentes, dans lequel ledit alliage métallique à base d'aluminium/zinc possède entre 80 et 90 pour cent en poids de zinc et entre 10 et 20 pour cent en poids d'aluminium.

9. Procédé pour la fabrication de panneaux qui comprennent un substrat (2) à base de lignocellulose, tel qu'une planche à base de fibres de bois ou une planche à base de particules agglomérées ; dans lequel ledit substrat (2) comprend une surface supérieure et une surface inférieure, et qui comprennent au moins une couche faisant office de revêtement (3a, 3b) qui est fixée à la surface supérieure ou à la surface inférieure ; dans lequel ladite couche faisant office de revêtement (3a, 3b) comprend du métal ; dans lequel ledit procédé comprend les étapes suivantes au cours desquelles :
- on procure une matière faisant office de substrat à base de lignocellulose, qui comprend une surface supérieure et une surface inférieure ;
- on enduit la surface supérieure et/ou la surface inférieure d'un alliage métallique à base d'aluminium/zinc afin d'obtenir une couche métallique ;
- on applique une couche de finition sur ladite couche métallique ; dans lequel ladite couche de finition comprend de préférence une couche qui résiste à l'usure afin d'obtenir une résistance à l'usure et /ou une résistance aux rayures.

10. Procédé pour la fabrication de panneaux selon la revendication 9, dans lequel l'enduction avec un alliage métallique à base d'aluminium/zinc est mise en œuvre par l'intermédiaire d'une enduction par pulvérisation, de préférence d'une enduction thermique par pulvérisation, telle qu'une enduction thermique par pulvérisation par l'intermédiaire d'un arc électrique, avec ledit alliage métallique à base d'aluminium/zinc.

11. Procédé pour la fabrication de panneaux selon la revendication 9 ou 10, dans lequel la couche de finition comprend au moins une feuille de papier imprégnée de résine ; dans lequel ladite feuille de papier imprégnée de résine est disposée par laminage de la couche de finition sur la couche métallique.
